Europäisches Patentamt

European Patent Office

Office européen des brevets

(19)

(11) Numéro de publication: **0 230 900 B1**

(12) **FASCICULE DE BREVET EUROPEEN**

(45) Date de publication de fascicule du brevet:
24.07.91

(51) Int. Cl.⁵: **H04L 7/02**

(21) Numéro de dépôt: **87100341.4**

(22) Date de dépôt: **13.01.87**

(54) **Dispositif de récupération de rythme.**

(30) Priorité: **20.01.86 FR 8600700**

(43) Date de publication de la demande:
**05.08.87 Bulletin 87/32**

(45) Mention de la délivrance du brevet:
**24.07.91 Bulletin 91/30**

(84) Etats contractants désignés:
**BE DE FR GB IT**

(56) Documents cités:

**IEEE TRANSACTIONS ON COMMUNICA-
TIONS, vol. COM-24, no. 5, mai 1976, pages
516-531, New York, US; K.H. MUELLER et al.:
"Timing recovery in digital synchronous
data receivers"**

(73) Titulaire: **ALCATEL TRANSMISSION PAR FAIS-
CEAUX HERTZIENS A.T.F.H.
55, rue Greffulhe
F-92301 Levallois-Perret Cédex(FR)**

(72) Inventeur: **Roux, Pierre
35, bd.de la Mission Marchand
F-92400 Courbevoie(FR)**

(74) Mandataire: **Weinmiller, Jürgen et al
Lennéstrasse 9 Postfach 24
W-8133 Feldafing(DE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

**Description**

La présente invention se rapporte à un dispositif de récupération de rythme.

Un tel dispositif est nécessaire pour la régénération d'un signal numérique après propagation dans un milieu distordant et bruyant.

En effet lorsqu'un signal numérique a subi un filtrage ou des distorsions diverses, et est pollué par du bruit, il est possible de lui faire subir un traitement en temps réel dans le but de le remettre en forme, sur une longue distance. Une transmission numérique peut nécessiter plusieurs régénérations.

Un tel traitement est rendu possible par le fait que lorsque l'on est en présence d'un signal de forme arrondie et pollué par du bruit, on peut utiliser certaines connaissances à priori de sa structure. Cette structure comprend :
- un rythme de fréquence fr, qui positionne les instants caractéristiques auxquels apparaissent les état discrets :
- un nombre déterminé d'états discrets : deux par exemple.

Lorsque l'on effectue cette régénération, le bruit et les distorsions donnent lieu à des erreurs. Celles-ci sont à priori indiscernables si l'on ne peut effectuer une comparaison bit à bit avec le signal initial.

Pour réaliser cette régénération en se plaçant dans le cas du signal binaire le plus simple, on peut opérer de la façon suivante
- d'abord effectuer une décision de niveau c'est-à-dire interpréter si l'on a reçu un 1 ou un 0. Cette opération a beaucoup de ressemblance avec un écrêtage par dépassement des seuils,
- ensuite récupérer le rythme pour assurer au mieux l'opération d'échantillonnage. Le rythme récupéré ne doit pas (ou peu) comporter de fluctuations parasites par rapport au rythme initial. Cela implique de pouvoir utiliser une raie fr = $\frac{1}{T}$ , raie qui est normalement absente du spectre des signaux numériques.

On pourrait être tenté de créer cette raie par un oscillateur local calé sur la valeur nominale de fr, mais on se heurte dans ce cas, à l'impossibilité fondamentale d'obtenir deux signaux sinusoïdaux, de fréquence et de phase rigoureusement identiques, en des lieux différents, ceci pour les raisons suivantes :
- la précision de calage ne le permet pas,
- la fréquence et la phase sont continuellement perturbées par des phénomènes comme la température et le bruit.

Ce qui explique l'intérêt d'un dispositif de récupération du rythme asservi sur le signal reçu, nécessaire pour la régénération, lors de la réception d'une porteuse modulée par un procédé numérique.

Le cahier des charges auquel doit répondre un tel dispositif comprend les points suivants :
   a) résistance aux distorsions et en particulier à la propagation par trajets multiples ;
   b) faible gigue résiduelle en l'absence de distorsions ;
   c) gigue admissible satisfaisante c'est-à-dire qu'une gigue importante ne conduit pas à des erreurs sur la transmission ;
   d) asservissement de phase sur l'ouverture optimale de l'oeil.

L'invention a pour objet un dispositif de récupération de rythme qui remplit ces conditions de façon très avantageuse.

L'invention propose à cet effet un dispositif de récupération de rythme recevant en entrée deux voies en phase et en quadrature (Vx, Vy) issues d'un démodulateur et comprenant un premier module en sortie duquel est présente une raie à la fréquence du rythme et qui est couplé à une boucle de verrouillage de phase, caractérisé en ce qu'il comprend deux seconds modules de récupération de rythme reliés chacun d'une part en une première entrée à l'une des voies démodulées et d'autre part en une seconde entrée à la sortie du premier module et qui comportent successivement, en partant de la première entrée, un dispositif à seuil échantillonné qui fournit le signe du signal véhiculé par la voie considérée et le signe de l'erreur, et qui peut être partagé avec des circuits assurant la fonction régénération proprement dite, un dispositif estimateur de phase, un dispositif de filtrage, un dispositif déphaseur, dont le déphasage est commandé par tension, rebouclé sur le dispositif à seuil et relié à la deuxième entrée dudit second module.

Avantageusement le dispositif de l'invention est caractérisé en ce que le premier module comprend un dispositif extracteur de signe réalisé à partir d'un comparateur et un dispositif dérivateur réalisé à partir d'un filtre passe-haut, en ce que chaque dispositif à seuil échantillonné comprend un échantillonneur suivi d'un convertisseur analogique-numérique, en ce que chaque dispositif estimateur de phase comprend un dispositif de logique séquentielle et un interface logique-analogique, et en ce que chaque dispositif de filtrage est un filtre passe-bas.

Dans une variante de l'invention, ce dispositif est caractérisé en ce que chaque dispositif de filtrage est un filtre passe-bande, et en ce que deux circuits de retard ajustable sont disposés respectivement entre la seconde entrée de chaque second module et la sortie du premier module.

Les caractéristiques et avantages de l'invention ressortiront d'ailleurs de la description qui va suivre, à titre d'exemple non limitatif, en références aux dessins annexés sur lesquels :

- les figures 1 et 2 sont des représentations schématiques de deux dispositifs de l'art antérieur ;
- la figure 3 est une représentation schématique du dispositif de l'invention,
- la figure 4 est une représentation schématique d'une variante du dispositif de l'invention.

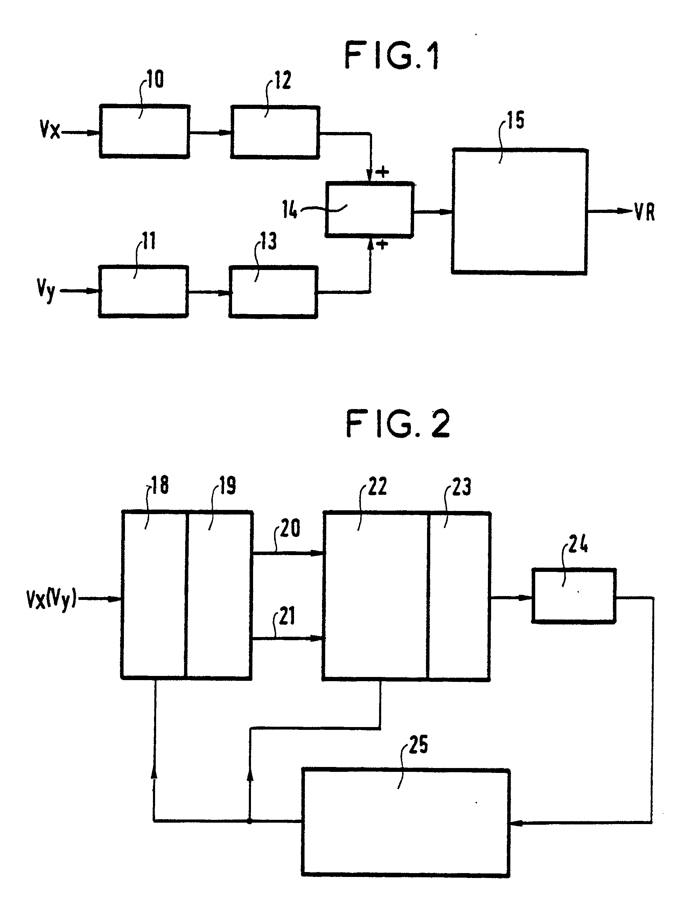

Un premier type A de dispositif de récupération de rythme représenté à la figure 1, comprend sur deux voies démodulées Vx et Vy, respectivement en phase et en quadrature, un comparateur 10 (ou 11) suivi d'un dérivateur 12 (ou 13), les deux voies entrant sur les deux entrés d'un sommateur 14 lui-même couplé à une boucle de verrouillage de phase 15.

On élabore, à partir de ces deux voies démodulées Vx et Vy, par un traitement non linéaire, un signal comportant une raie à la fréquence du rythme. Cette raie $V_R$ est ensuite extraite par une boucle à verrouillage de phase 15. Un tel dispositif permet une récupération du rythme basée sur les "passages à zéro" : le signal dont on extraie la raie rythme est alors constitué d'impulsions détectant les passages à zéro sur l'une ou l'autre voie.

Un second type B de dispositif de récupération de rythme, représenté à la figure 2 comprend sur l'une des voies démodulées Vx ou Vy un dispositif à seuil échantillonné, constitué par exemple d'un échantillonneur 18 suivi d'un convertisseur analogique-numérique 19 avec un certain nombre d'états possibles, par exemple 12, qui permet de connaître le signe (20) du signal véhiculé par Vx (ou Vy) et le signe (21) de l'erreur estimée. Ce dispositif peut par ailleurs assurer la régénération du signal. Ces deux signaux (20 et 21) entrent sur un dispositif estimateur de phase, constitué d'une logique séquentielle 22 et d'un interface logique-analogique 23.

Le signal de sortie de ce dispositif (22, 23) entre dans un filtre passe-bas 24 suivi d'un VCXO 25 (oscillateur à quartz commandé en tension) qui reboucle à la fois sur l'échantillonneur 18 et sur la logique séquentielle 22.

Un tel dispositif est donc relatif à une boucle à verrouillage de phase, où l'estimation de l'erreur de phase se fait à partir d'une étude temporelle sur le signal reçu. De tels estimateurs de phase sont décrits dans l'article de Kurt H Mueller et Markus Müller (IEEE TRANSACTIONS ON COMMUNICATIONS, vol. COM 24, no.5 de mai 1976).

Le convertisseur analogique-numérique 19 échantillonné fournit le signe estimé du signal sur la voie considérée ainsi que le signe estimé de l'erreur (avec erreur estimée = niveau reçu - niveau estimé). Ces informations sont mémorisées sur un certain nombre de temps symboles, et traitées de façon à obtenir des signaux numériques dans lesquels la répartition statistique des niveaux logiques est caractéristique de l'erreur de phase. On extrait alors l'estimation de l'erreur de phase.

Un exemple de réalisation d'un tel dispositif est celui où la valeur de sortie de l'estimateur (22, 23) vaut :

$$e\,\phi = \text{signe } X.\text{signe (erreur sur } X_{-1}) - \text{signe } X_{-1}.\text{signe (erreur sur } X)$$

où $X_{-1}$ et $X$ sont des valeurs prises à un temps symbole d'écart.
On montre que en moyenne :

$$e\,\phi = h_1 - h_{-1}$$

où $h_1$ et $h_{-1}$ sont des échantillons n° 1 et n° -1 de la réponse impulsionnelle du canal considéré.

Le rythme se cale sur une phase pour laquelle l'erreur est nulle :

$$e\,\phi = 0 = h_1 = h_{-1}$$

Ces deux types de dispositifs, représentés respectivement aux figures 1 et 2 remplissent différemment le cahier des charges. Ainsi si l'on examine les quatre points a, b, c, d énoncés précédemment :

a) les récupérations du premier type (A) admettent plus de distorsions, au vu des signatures de raccrochage et de décrochage, signatures qui caractérisent la résistance du dispositif à la propagation par trajets multiples. L'usage de l'erreur estimée, dans le deuxième type (B) explique cela car les distorsions agissent sur la validité de l'estimation de l'erreur.

Ce point est important, car la convergence des systèmes autoadaptatifs, permettant de compenser les effets de la propagation par trajets multiples, est conditionnée par la présence du rythme.

b) La gigue résiduelle est meilleure dans le deuxième cas (B).

c) Dans les deux cas on arrive à une gigue admissible satisfaisante en réglant la bande de boucle en conséquence.

d) L'asservissement de phase sur l'ouverture optimale de l'oeil est meilleur dans le deuxième cas (B). Il n'y a en effet dans ce cas, aucun réglage manuel de déphasage.

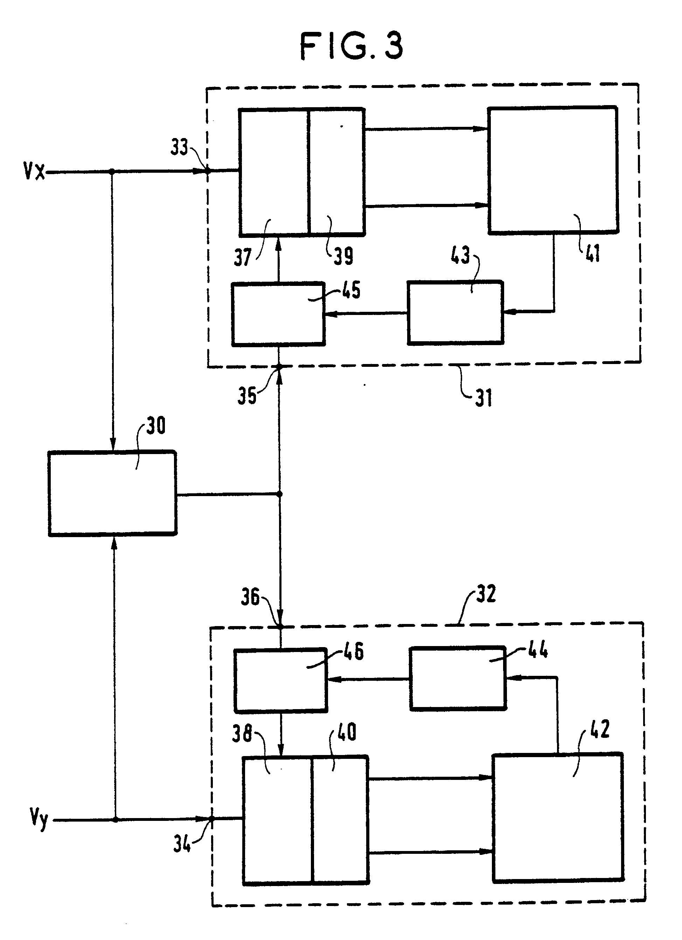

Le dispositif de l'invention représenté par la figure 3 a pour but de combiner les avantages de ces deux types (A et B) de dispositifs examinés précédemment.

Il comprend un premier module 30 de récupération de rythme par exemple du type représenté à la figure 1, et deux seconds modules 31, 32.

D'autres modules 30 de récupération de rythme de l'art antérieur peuvent être utilisés basés par exemple sur une opération non linéaire appliquée au signal haute fréquence modulé.

Chacun de ces seconds modules 31 (32) a une première entrée 33 (34) reliée à une des deux voies Vx (Vy) démodulées et une seconde entrée 35 (36) reliée à la sortie du premier module 30.

Chacun de ces seconds modules 31 (32) comporte successivement, en partant de leur première entrée 33 (34), un dispositif à seuil échantillonné, constitué par exemple d'un échantillonneur 37 (38) suivi d'un convertisseur analogique-numérique 39 (40), un dispositif estimateur de phase de type B 41 (42) tel que décrit précédemment, un dispositif de filtrage, par exemple un filtre passe-bas 43 (44) et un dispositif déphaseur, à déphasage commandé par tension, 45 (46) relié d'une part à l'échantillonneur 37 (38) et d'autre part, en ce qui forme la deuxième entrée 35 (36), à la sortie du premier module 30.

La récupération du rythme se fait en deux étapes : la module 30 du type A récupère un rythme intermédiaire. Chaque estimateur de phase 41 (42) du type B ajuste la phase du rythme destiné au dispositif de prise de décision (convertisseur analogique-numérique échantillonné en l'occurrence). Cet ajustement se fait séparément sur les deux voies Vx et Vy.

Si l'on considère alors les quatre points a, b, c, d énoncés précédemment :

a) On peut se réserver la possibilité d'inhiber les asservissements de phase assurés par les boucles 31 (32) en imposant aux déphaseurs des valeurs fixes. Cette inhibition se fait alors par commutateurs analogiques, en cas de distorsion par exemple par propagation par trajets multiples. On peut utiliser l'alarme de récupération de porteuse pour commander cette inhibition. On revient alors à une récupération de premier type (A).

b, c) Par un réglage suffisamment large de sa bande de boucle, la boucle 30 de type A assure l'admissibilité en gigue pour satisfaire aux gabarits habituels de gigue admissible.

Les bandes de boucles des deux asservissements en phase de type B doivent être réglées à des valeurs supérieures à celle de la bande de boucle de type A. Ainsi, la gigue résiduelle de la boucle de type A est corrigée, seules subsistent les gigues résiduelles des boucles d'asservissement en phase type B qui sont faibles.

d) L'asservissement de ce dispositif est naturellement réalisé sur l'ouverture optimale de l'oeil pour : $h_1 = h_{-1}$.

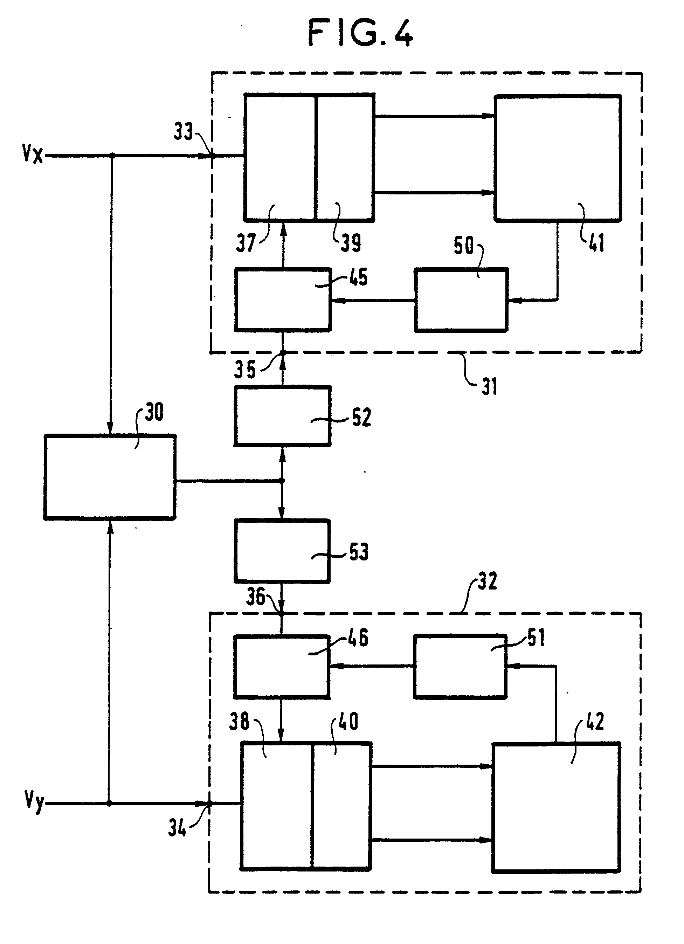

Une variante du dispositif de l'invention, représentée à la figure 4 a différents éléments caractéristiques qui le distingue du dispositif représenté à la figure 3 : en effet elle comprend des filtres passe-bande 50 (51) à la place des filtres passe-bas 43 (44), et des dispositifs à retard ajustable 52 (53) disposés entre la deuxième entrée de chaque deuxième module 31 (32) et la sortie du premier module 30.

Un tel dispositif est compatible avec un égaliseur auto-adaptatif.

En effet la récupération du type B détaillée précédemment utilise la fonction d'erreur : e $\phi$ = $h_1 - h_{-1}$.

Or, si l'égaliseur dispose de m coefficients avants et n coefficients arrières, alors les échantillons de la réponse impulsionnelle allant de - m à + n sont annulés, excepté l'échantillon central (avec m inférieur à n par exemple).

La fonction d'erreur précédente devient alors inexploitable. La compatibilité est cependant rendue possible par l'application de deux mesures :

1/ Choix d'un fonctionnement auto-adaptatif avec "zone morte". Il s'agit d'un fonctionnement dans lequel aucune modification de la fonction de transfert de l'égaliseur n'est décidée, tant que la fermeture de l'oeil ne dépasse pas un certain seuil. Ce seuil est choisi de telle manière que l'on reste éloigné des erreurs de décisions.

Dans ces conditions, une faible erreur de phase pour le rythme n'entraîne aucune réaction de l'égaliseur auto-adaptatif et l'asservisement peut se faire.

A ce stade, la compatibilité n'est pas encore complète, car après une période de convergence de l'algorithme auto-adaptatif (sur apparition d'une distorsion par exemple) la phase du rythme prend une valeur aléatoire.

Il faut appliquer la seconde mesure :

2/ Choix de la structure illustrée à la figure 4 qui permet la suppression de la composante continue des asservissements en phase :

Cette suppression se fait, en effet, en substituant aux filtres de boucles 43 (44) qui sont passe-bas, des filtres passe-bande 50 (51) dont la fréquence de coupure basse est très basse (quelques dizaines de hertz).

La fonction de transfert en gigue des asservissements de phase devient nulle pour le continu. La phase moyenne du rythme n'est plus fixée que par un ajustement manuel réalisé à l'aide des dispositifs à retard ajustable 52 et 53 qui permettent de régler le déphasage du rythme sur l'ouverture optimale de l'oeil. Heureusement cette phase est moins critique en auto-adaptatif, et le réglage moins délicat. L'asservissement de phase garde un fonctionnement dynamique.

La réduction de la gigue résiduelle (sur le rythme intervenant dans les prises de décision) reste effective.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

**Revendications**

1. Dispositif de récupération de rythme recevant en entrée deux voies (Vx, Vy) en phase et quadrature issues d'un démodulateur comprenant un premier module (30) en sortie duquel est présente une raie à la fréquence du rythme et qui comprend une boucle (15) de verrouillage de phase, caractérisé en ce qu'il comprend deux seconds modules (31, 32) de récupération de rythme reliés chacun d'une part en une première entrée (33, 34) à l'une des voies démodulées (Vx, Vy) et d'autre part en une seconde entrée (35, 36) à la sortie du premier module (30) et qui comportent successivement, en partant de la première entrée, un dispositif à seuil échantillonné (37, 39 et 38, 40) qui fournit le signe du signal véhiculé par la voie considérée et le signe de l'erreur et qui peut être partagé avec des circuits assurant la régénération proprement dite, un dispositif estimateur de phase (41, 42), un dispositif de filtrage (43, 44), un dispositif déphaseur (45, 46), dont le déphasage est commandé par tension, rebouclé sur le dispositif à seuil et relié à la deuxième entrée (35, 36) dudit second module.

2. Dispositif selon la revendication 1, caractérisé en ce que le premier module (30) comprend un dispositif extracteur de signe (10, 11), réalisé à partir d'un comparateur, et un dispositif dérivateur (12, 13), réalisé à partir d'un filtre passe-haut.

3. Dispositif selon la revendication 1, caractérisé en ce que chaque dispositif à seuil échantillonné (37, 39 et 38, 40) comprend un échantillonneur (37, 38) suivi d'un convertisseur analogique-numérique (39, 40).

4. Dispositif selon la revendication 1, caractérisé en ce que chaque dispositif estimateur de phase (41, 42) comprend un dispositif de logique séquentielle et un interface logique-analogique.

5. Dispositif selon l'une quelconque des revendications 1 à 4, caractérisé en ce que chaque dispositif de filtrage est un filtre passe-bas.

6. Dispositif selon l'une quelconque des revendications 1 à 4, caractérisé en ce que chaque dispositif de filtrage est un filtre passe-bande (50, 51).

7. Dispositif selon la revendication 6, caractérisé en ce que deux circuits de retard ajustable (52, 53) sont disposés respectivement entre la seconde entrée (35, 36) de chaque second module (31, 32) et la sortie du premier module (30).

**Claims**

1. A clock recovery device adapted to receive on two inputs the in-phase and the quadrature path signals (Vx, Vy) respectively from a demodulator, and comprising a first module (30), at the output of which appears a spectrum line at clock frequency and which comprises a phase-locked loop (15), characterized in that said clock recovery device further comprises two second clock recovery modules (31, 32), each having a first input (33, 34) receiving a respective one of the two demodulated path signals (Vx, Vy) on the one hand, and a second input (35, 36) connected to the output of the first module (30) on the other hand, and which comprises, in succession from said first input, a sampled threshold device (37, 39 and 38, 40) for providing the sign of the signal conveyed by the corresponding path and the sign of the error, and which may be shared with circuits for ensuring the function of signal generation properly speaking, a phase estimator device (41, 42), a filter device (43, 44), and a phase shifter device (45, 46), whose phase shift is voltage-controlled, looped-back to the threshold device and connected to the second input (35, 36) of said second module.

2. A device according to claim 1, characterized in that the first module (30) comprises a sign extractor device (10, 11) based on a comparator, and a differentiator device (12, 13) based on a high-pass filter.

3. A device according to claim 1, characterized in that each sampled threshold device (37, 39 and 38, 40) comprises a sampler (37, 38) followed by an analog-to-digital converter (39, 40).

4. A device according to claim 1, characterized in that each phase estimator device (41, 42) comprises a sequential logic device and a logic-to-analog interface.

5. A device according to any one of claims 1 to 4, characterized in that each filter device is a low pass filter.

6. A device according to any one of claims 1 to 4, characterized in that each filter device is a band-pass filter (50, 51).

7. A device according to claim, 6, characterized in that two adjustable delay circuits (52, 53) are disposed respectively between the second input (35, 36) of each second module (31, 32) and the output from the first module (30).

**Patentansprüche**

1. Taktwiedergewinnungseinrichtung, die am Eingang zwei von einem Demodulator kommende in Phase bzw. um 90° phasenverschobene Kanalsignale (Vx, Vy) empfängt und einen ersten Modul (30), an dessen Ausgang eine Spektrallinie mit Taktfrequenz erscheint, und eine Phasenregelschleife (15) aufweist, dadurch gekennzeichnet, daß die Einrichtung zwei zweite Taktwiedergewinnungsmodule (31, 32) aufweist, die einerseits mit jeweils einem ersten Eingang (33 bzw. 34) eines der demodulierten Kanalsignale (Vx, Vy) empfangen und andererseits mit jeweils einem zweiten Eingang (35 bzw. 36) an den Ausgang des ersten Moduls (30) angeschlossen sind und die nacheinander, beginnend am ersten Eingang, eine Einrichtung mit getasteter Schwelle (37, 39 bzw. 38, 40), die das Vorzeichen des von dem jeweiligen Kanal übertragenen Signals und das Fehlervorzeichen liefert und die Bestandteil der Schaltungen zur eigentlichen Regenerierung sein werden kann, eine Phasenschätzeinrichtung (41, 42), eine Filtereinrichtung (43, 44) und eine Phasenschiebereinrichtung (45, 46) aufweist, deren Phasenverschiebung spannungsgesteuert ist und die auf die Schwelleneinrichtung rückgekoppelt und an den zweiten Eingang (35, 36) des zweiten Moduls angeschlossen ist.

2. Einrichtung nach Anspruch 1, dadurch gekennzeichnet, daß der erste Modul (30) eine Vorzeichenentnahmeeinrichtung (10, 11), die auf der Basis eines Komparators aufgebaut ist, und eine Differenziereinrichtung (12, 13) aufweist, die auf der Basis eines Hochpaßfilters aufgebaut ist.

3. Einrichtung nach Anspruch 1, dadurch gekennzeichnet, daß jede Einrichtung mit getasteter Schwelle (37, 39 bzw. 38, 40) einen Tastkreis (37, 38) mit einem nachfolgenden Analog/Digitalwandler (39, 40) aufweist.

4. Einrichtung nach Anspruch 1, dadurch gekennzeichnet, daß jede Phasenschätzeinrichtung (41, 42) ein Schaltwerk und eine Logik/Analogschnittstelle aufweist.

5. Einrichtung nach einem beliebigen der Ansprüche 1 bis 4, dadurch gekennzeichnet, daß jede Filtereinrichtung ein Tiefpaßfilter ist.

6. Einrichtung nach einem beliebigen der Ansprüche 1 bis 4, dadurch gekennzeichnet, daß jede Filtereinrichtung ein Bandpaßfilter (50, 51) ist.

7. Einrichtung nach Anspruch 6, dadurch gekennzeichnet, daß zwei ein einstellbare Verzögerungsschaltungen (52, 53) jeweils zwischen dem zweiten Eingang (35, 36) eines der zweiten Module (31, 32) und dem Ausgang des ersten Moduls (30) angeordnet sind.

# FIG.1

# FIG. 2

# FIG. 3

# FIG.4